# EUROPEAN PATENT APPLICATION

(11) **EP 3 605 667 A1**
(43) Date of publication of application: **05.02.2020**
(21) Application number: 19188455.0
(22) Date of filing: 25.07.2019
(51) Int. Cl.: H01M 4/13, H01M 10/00

(54) **LITHIUM ION SECONDARY BATTERY, AND MANUFACTURING METHOD AND INSPECTION METHOD FOR NEGATIVE ELECTRODE FOR LITHIUM ION SECONDARY BATTERY**

(30) Priority: 03.08.2018 JP 2018146466
(71) Applicant: Envision AESC Japan Ltd., Zama-shi, Kanagawa 252-0012 (JP)
(72) Inventor: MODEKI, Akihiro, Kanagawa, 252-0012 (JP); TANJO, Yuji, Kanagawa, 252-0012 (JP)
(74) Representative: Mathys & Squire

(57) **Abstract**

A lithium ion secondary battery includes: a power generating element including an electrolyte solution, and an electrode stack including a positive electrode including a positive electrode active material layer and a positive electrode current collector foil and a negative electrode including a negative electrode active material layer and a negative electrode current collector foil, the positive electrode and the negative electrode being stacked with a separator interposed therebetween; and a package that internally seals this power generating element. The negative electrode current collector foil is a copper foil, and the negative electrode has a tensile strength of 17.6 N/mm² or more and 20.0 N/mm² or less.

## Description

### BACKGROUND

### 1. Technical Field

One embodiment of the present disclosure relates to a nonaqueous electrolyte secondary battery, particularly a lithium ion secondary battery. Another embodiment of the present disclosure relates to a manufacturing method for a negative electrode for a lithium ion secondary battery and an inspection method for a negative electrode for a lithium ion secondary battery.

### 2. Related Art

Nonaqueous electrolyte secondary batteries have been put into practical use as batteries for on-vehicle power sources for vehicles including hybrid vehicles and electric vehicles. Examples of such batteries for the on-vehicle power sources include a lithium ion secondary battery. The lithium ion secondary battery has been required to have various characteristics such as an output characteristic, energy density, capacity, lifetime, and high-temperature stability. In particular, in order to improve the stability and the lifetime of the battery, a battery structure including an electrode and an electrolyte solution has been improved variously.

The lithium ion secondary batteries include a wound type battery and a stacked type battery (hereinafter also referred to as "laminate type battery"). In the wound type battery, a positive electrode, a negative electrode, and a separator are stacked and wound, and sealed in a container such as a can together with an electrolyte solution. In the stacked type battery, a sheet-shaped power generating element including a stack of a positive electrode, a negative electrode, and a separator is sealed in a relatively soft package together with an electrolyte solution. The wound type battery includes a battery can as the package. Therefore, the wound type battery has high strength. On the other hand, the stacked battery is suitably used as the battery for the on-vehicle power source because of having high weight energy density and a high degree of freedom in shape.

JP-A-2015-64988 discloses a wound type battery. According to JP-A-2015-64988, the following points are disclosed in regard to a nonaqueous electrolyte secondary battery in which a carbon material is used as a negative electrode active material and layered oxide containing nickel, cobalt, manganese, or the like is used as a positive electrode active material. That is to say, if single metal of aluminum, silicon, germanium, or the like that can achieve higher capacity than a carbonaceous material is used in order to increase the capacity of such a nonaqueous electrolyte secondary battery, a copper foil used as a current collector drastically changes in shape and internal short-circuiting easily occurs in initial charging and discharging. In view of this, JP-A-2015-64988 has suggested to use silicon, silicon-containing oxide, or tin-containing oxide as the negative electrode active material. An example in this literature has also suggested to use a stainless steel foil as a negative electrode current collector. In addition, it is disclosed that a negative electrode has a tensile strength of 400 N/mm² or more and 1200 N/mm² or less, and the peel strength between the negative electrode current collector and the negative electrode active material layer is 1.5 N/cm or more and 4 N/cm or less.

### SUMMARY

A lithium ion secondary battery includes: a power generating element including an electrolyte solution, and an electrode stack including a positive electrode including a positive electrode active material layer and a positive electrode current collector foil and a negative electrode including a negative electrode active material layer and a negative electrode current collector foil, the positive electrode and the negative electrode being stacked with a separator interposed therebetween; and a package that internally seals this power generating element. The negative electrode current collector foil is a copper foil, and the negative electrode has a tensile strength of 17.6 N/mm² or more and 20.0 N/mm² or less.

### BRIEF DESCRIPTION OF THE DRAWINGS

FIGURE is a schematic cross-sectional view illustrating a lithium ion secondary battery according to one embodiment of the present disclosure.

### DETAILED DESCRIPTION

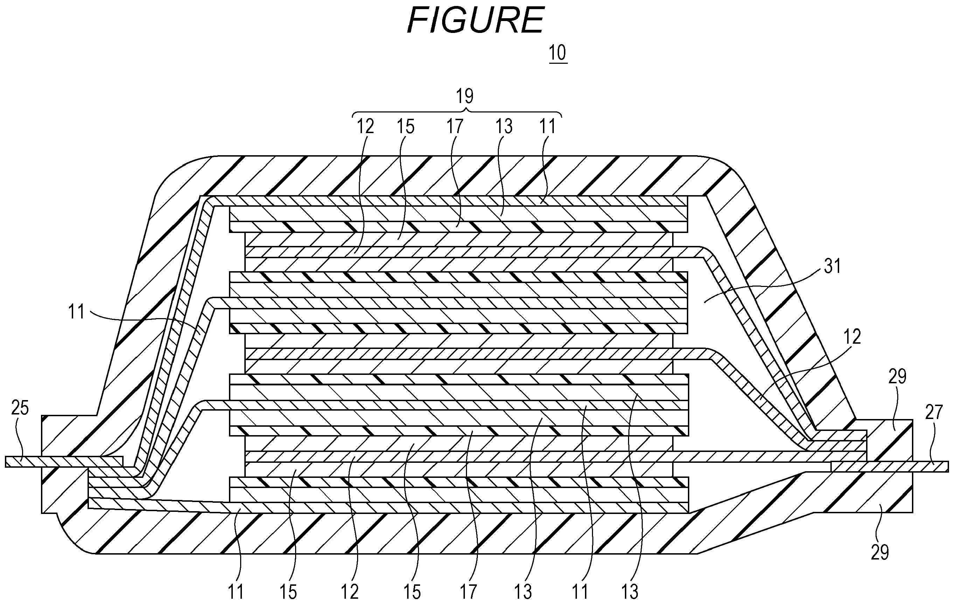

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

In the technique according to JP-A-2015-64988, the capacity of the negative electrode is increased and the cycle characteristic of the nonaqueous electrolyte secondary battery is improved by changing the negative electrode active material and the negative electrode current collector foil. On the other hand, also in the conventional negative electrode that is used for a laminate type battery including the carbon material as the negative electrode active material and including the copper foil as the negative electrode current collector foil, the negative electrode active material and the negative electrode current collector are peeled as the battery is charged and discharged. This peeling may influence the cycle characteristic of the battery.

In view of the above, one object of the present disclosure is to manufacture a negative electrode that can improve the cycle characteristic of a battery with the use of the conventional negative electrode material, and to provide a lithium ion secondary battery with a long life.

A lithium ion secondary battery according to the present disclosure includes: a power generating element including an electrolyte solution, and an electrode stack including a positive electrode including a positive electrode active material layer and a positive electrode current collector foil and a negative electrode including a negative electrode active material layer and a negative electrode current collector foil, the positive electrode and the negative electrode being stacked with a separator interposed therebetween; and a package that internally seals this power generating element. The negative electrode current collector foil is a copper foil, and the negative electrode has a tensile strength of 17.6 N/mm² or more and 20.0 N/mm² or less.

Further, a manufacturing method for a negative electrode for a lithium ion secondary battery includes forming a negative electrode active material layer, forming the negative electrode active material layer including: applying a negative electrode active material mixture slurry on a negative electrode current collector foil; drying the negative electrode active material mixture slurry in an atmosphere of 130 to 150°C; and drying the negative electrode active material mixture slurry in an atmosphere of 80 to 150°C.

An inspection method for a negative electrode for a lithium ion secondary battery, includes: measuring a tensile strength of a negative electrode for a lithium ion secondary battery including a negative electrode active material layer including a carbon material, and a negative electrode current collector foil as a copper foil; determining that the negative electrode for the lithium ion secondary battery is an acceptable product if the tensile strength is within a predetermined range; and determining that the negative electrode for the lithium ion secondary battery is an unacceptable product if the tensile strength is not within the predetermined range.

According to the manufacturing method for a negative electrode for a lithium ion secondary battery according to the present disclosure, the negative electrode for a lithium ion secondary battery with excellent peel strength can be obtained. The lithium ion secondary battery including this negative electrode for a lithium ion secondary battery is excellent in cycle characteristic and has a long life.

An embodiment of the present disclosure is hereinafter described.

A lithium ion secondary battery according to the embodiment is a lithium ion secondary battery including: a power generating element including an electrolyte solution, and an electrode stack including a positive electrode including a positive electrode active material layer and a positive electrode current collector foil and a negative electrode including a negative electrode active material layer and a negative electrode current collector foil, the positive electrode and the negative electrode being stacked with a separator interposed therebetween; and a package that internally seals this power generating element.

In the embodiment, the positive electrode is a thin-plate or sheet shaped battery member including a positive electrode current collector foil such as a metal foil, and a positive electrode active material layer formed on a surface of the positive electrode current collector foil. The positive electrode active material layer is formed by applying or rolling a mixture of a positive electrode active material, a binder, and a conductive agent on at least one surface of the positive electrode current collector foil, and drying this mixture.

The negative electrode is a thin-plate or sheet shaped battery member including a negative electrode current collector foil, and a negative electrode active material layer formed on a surface of the negative electrode current collector foil. The negative electrode active material layer is formed by applying a mixture of a negative electrode active material, a binder, and a conductive agent on at least one surface of the negative electrode current collector foil.

The separator is a film-shaped battery member for separating the positive electrode and the negative electrode in order to secure the conductivity of lithium ions between the negative electrode and the positive electrode. The electrolyte solution is an electrically conductive solution in which an ionic substance is dissolved in a solvent. The electrolyte solution may be a nonaqueous electrolyte solution particularly in the present embodiment. The stack of the positive electrode, the negative electrode, and the separator corresponds to the electrode stack. The power generating element including the electrode stack and the electrolyte solution constitutes one unit of main component members of the battery. Usually, a plurality of positive electrodes and a plurality of negative electrodes are stacked with a plurality of separators interposed therebetween, so that the electrode stack is formed. This electrode stack is impregnated with the electrolyte solution.

The lithium ion secondary battery according to the embodiment includes the power generating element in the package. The power generating element is preferably sealed in the package. "Sealing" means that the power generating element is covered with a relatively soft package material so that at least a part of the power generating element is not exposed to external air. The package of the lithium ion secondary battery according to the embodiment is a housing or a bag-shaped package formed of a relatively soft material. This package has a gas barrier property and can seal the power generating element. A preferable example of the package is a metal laminate sheet. The metal laminate sheet is preferably an aluminum laminate sheet corresponding to a stack of an aluminum foil and polypropylene or the like. In this case, the lithium ion secondary battery according to the embodiment is a laminate type battery. Alternatively, the lithium ion secondary battery may be any other type such as a coil type battery or a wound type battery.

In the lithium ion secondary battery according to the embodiment, the negative electrode current collector foil is a copper foil and the negative electrode has a tensile strength of 17.6 N/mm² or more and 20.0 N/mm² or less. As the negative electrode current collector foil, a copper foil is used. The copper foil is formed by rolling or electrically depositing metal copper into a foil shape. The copper foil that can be used as the negative electrode current collector foil has a thickness of preferably 4 to 20 µm, more preferably 4 to 10 µm.

Here, the tensile strength is the value obtained from a tensile test. In the tensile test, a predetermined test piece with a plate-like elongate shape is held from both sides and pulled in opposite directions, so that the strength of the test piece is measured. The tensile test can be performed usually by methods defined in, for example, JIS C6515 (copper foil for printed wiring boards) and JIS Z2241 (metallic materials - tensile testing method).

The tensile strength of the negative electrode is the stress (unit: N/mm²) applied per unit cross-sectional area at a point where the negative electrode is broken in a predetermined tensile test. In the lithium ion secondary battery according to the embodiment, the tensile strength of the negative electrode is preferably 17.6 N/mm² or more and 20.0 N/mm² or less. The present inventors have found out that if the negative electrode has the tensile strength within a predetermined range, the peel strength between the negative electrode active material layer and the negative electrode current collector foil included in the negative electrode can be kept high. The peel strength of the negative electrode is the characteristic value that has a large influence on the cycle characteristic of the negative electrode and the lithium ion secondary battery including the negative electrode. In general, as the peel strength of the negative electrode is higher, the cycle characteristic of the lithium ion secondary battery including that negative electrode is higher.

Subsequently, the members that form the lithium ion secondary battery are described in more detail. The positive electrode that can be used in every embodiment includes the positive electrode including the positive electrode current collector foil and the positive electrode active material layer including the positive electrode active material that is disposed on a surface of the positive electrode current collector foil. Preferably, the positive electrode active material layer of the positive electrode is obtained by applying or rolling the mixture of the positive electrode active material, the binder, and the conductive agent on the positive electrode current collector foil including a metal foil such as an aluminum foil, and drying this mixture. The positive electrode active material layer is preferably a porous or microporous layer including pores. In each embodiment, the positive electrode active material layer preferably includes lithium nickel composite oxide as the positive electrode active material. The lithium nickel composite oxide is transition metal composite oxide containing lithium and nickel, and is expressed by a general formula LiₓNi_{y}Me_{(1-y)}O₂ (here, Me is at least one kind of metal selected from the group consisting of Al, Mn, Na, Fe, Co, Cr, Cu, Zn, Ca, K, Mg, and Pb).

The positive electrode active material layer can additionally include lithium manganese composite oxide as the positive electrode active material. Examples of the lithium manganese composite oxide include lithium manganese oxide (LiMnO₂) with a zig-zag-layered structure and lithium manganese oxide with a spinel structure (LiMn₂O₄). By using the lithium manganese composite oxide in combination, the positive electrode can be manufactured at lower cost. In particular, it is preferable to use the spinel type lithium manganese oxide (LiMn₂O₄), which is superior in stability of the crystal structure in an overcharged state. If the positive electrode active material includes the lithium manganese positive electrode active material, the lithium manganate positive electrode active material is contained by preferably 70 wt% or less, more preferably 30 wt% or less, of the weight of the positive electrode active material. In a case of using the mixed positive electrode, if the positive electrode active material includes an excessive amount of lithium manganese composite oxide, a partial battery is easily formed between the mixed positive electrode and a deposit that is derived from a metal foreign matter and that can enter the battery, and in this case, short-circuiting current easily flows.

In particular, the positive electrode active material layer preferably includes as the positive electrode active material, lithium nickel manganese cobalt composite oxide with a layered crystal structure that is expressed by a general formula LiₓNi_{y}Co_{z}Mn_{(1-y-z)}O₂. Here, in the general formula, x is a positive numeral satisfying 1 ≤ x ≤ 1.2, y and z are positive numerals satisfying y + z < 1, and y is a value of 0.5 or less. As manganese is contained more, it becomes difficult to synthesize the composite oxide in a single phase. Therefore, 1 - y - z ≤ 0.4 is desirably satisfied. In addition, as cobalt is contained more, the cost becomes higher and the capacity becomes lower. Therefore, z < y and z < 1 - y - z are desirably satisfied. In order to achieve the high-capacity battery, it is particularly preferable to satisfy y > 1 - y - z and y > z. The lithium nickel composite oxide expressed by this general formula is lithium nickel cobalt manganese composite oxide (hereinafter also referred to as "NCM"). NCM is lithium nickel composite oxide that is suitably used in order to achieve the higher capacity of the battery. For example, the composite oxide expressed by a general formula LiₓNi_{y}Co_{z}Mn_{(1.0-y-z)}O₂ in which x = 1, y = 0.4, and z = 0.3 is referred to as "NCM433", and the composite oxide expressed by the general formula LiₓNi_{y}Co_{z}Mn_{(1.0-y-z)}O₂ in which x = 1/3, y = 1/3, and z = 1/3 is referred to as "NCM111".

Examples of the conductive agent that is used for the positive electrode active material layer include carbon materials including carbon fiber such as carbon nanofiber, carbon black such as acetylene black or Ketjen black, activated carbon, graphite, mesoporous carbon, fullerenes, and carbon nanotube. The ratio of the conductive agent used in the positive electrode active material layer is preferably 3 to 6%, more preferably 3.5 to 5%, to the total mass of the solid content of the positive electrode active material, the conductive agent, and the binder.

Examples of the binder used for the positive electrode active material layer include: fluorine resins such as polyvinylidene fluoride (PVDF), polytetrafluoroethylene (PTFE), and polyvinyl fluoride (PVF); conductive polymers such as polyanilines, polythiophenes, polyacetylenes, and polypyrroles; synthetic rubber such as styrene butadiene rubber (SBR), butadiene rubber (BR), chloroprene rubber (CR), isoprene rubber (IR), and acrylonitrile butadiene rubber (NBR); and polysaccharides such as carboxymethyl cellulose (CMC), xanthan gum, guar gum, and pectin. In addition, the positive electrode active material layer may contain an additive generally used for forming the electrode, such as thickener, dispersant, and stabilizer.

In the formation of the positive electrode active material layer, the positive electrode active material, the binder, the conductive agent, and an additive that is necessary are mixed and this mixture is diffused in an appropriate solvent; thus, a slurry is formed. This slurry is applied or rolled on the positive electrode current collector foil such as a metal foil, and this slurry is dried. Thus, the positive electrode active material layer can be formed and the positive electrode can be manufactured.

The negative electrode that can be used in every embodiment includes the negative electrode including the negative electrode current collector foil and the negative electrode active material layer including the negative electrode active material that is disposed on the negative electrode current collector foil. Preferably, the negative electrode active material layer of the negative electrode is obtained by applying or rolling the mixture of the negative electrode active material, the binder, and the conductive agent on the negative electrode current collector foil including a metal foil (preferably, copper foil), and drying this mixture. The negative electrode active material layer is preferably a porous or microporous layer including pores. In each embodiment, the negative electrode active material includes graphite. In particular, the negative electrode active material layer including graphite is advantageous in improving the output of the battery even when the state of charge (SOC) of the battery is low. Graphite is a hexagonal crystal carbon material having a hexagonal-plate-like crystal structure, and is also referred to as black lead or the like. The shape of the graphite is preferably like a particle.

Examples of graphite include natural graphite and artificial graphite. Natural graphite is inexpensive and can be obtained in large quantities, and has a stable structure and excellent durability. Artificial graphite is the graphite produced artificially. Since the artificial graphite has high purity (hardly containing impurities such as allotropes), the artificial graphite has the low electric resistance. Either the natural graphite or the artificial graphite can be used suitably as the carbon material in the embodiment. As the carbon material in the embodiment, natural graphite including the coating of amorphous carbon or artificial graphite including the coating of amorphous carbon can be used.

The amorphous carbon is the carbon material that is amorphous as a whole, with a structure in which microcrystals are randomly networked. The amorphous carbon may include, in a part, a structure similar to graphite. Examples of the amorphous carbon include carbon black, coke, activated carbon, carbon fiber, hard carbon, soft carbon, and mesoporous carbon.

These negative electrode active materials may be mixed to be used in some cases. Alternatively, graphite covered with amorphous carbon can be used. When the mixed carbon material including both the graphite particles and the amorphous carbon particles is used as the negative electrode active material, the regeneration performance of the battery is improved. When the natural graphite particles including the coating of the amorphous carbon or the artificial graphite including the coating of the amorphous carbon is (are) used as the carbon material of the negative electrode active material, the decomposition of the electrolyte solution is suppressed; therefore, the durability of the negative electrode is improved.

In the case of using the artificial graphite, the artificial graphite preferably has an interlayer distance d value (d₀₀₂) of 0.337 nm or more. The structure of the crystal of the artificial graphite is usually thinner than that of the natural graphite. In the case of using the artificial graphite as the negative electrode active material for a lithium ion secondary battery, it is preferable that the artificial graphite has an interlayer distance that enables the intercalation of lithium ions. The interlayer distance that enables the intercalation and deintercalation of lithium ions is estimated based on the d value (d₀₀₂). When the d value is 0.337 nm or more, the intercalation and deintercalation of lithium ions are possible without a problem.

Examples of the conductive agent used for the negative electrode active material layer include carbon materials including carbon fiber such as carbon nanofiber, carbon black such as acetylene black and Ketjen black, activated carbon, mesoporous carbon, fullerenes, and carbon nanotube.

Examples of the binder used for the negative electrode active material layer include: fluorine resins such as polyvinylidene fluoride (PVDF), polytetrafluoroethylene (PTFE), and polyvinyl fluoride (PVF); conductive polymers such as polyanilines, polythiophenes, polyacetylenes, and polypyrroles; synthetic rubber such as styrene butadiene rubber (SBR), butadiene rubber (BR), chloroprene rubber (CR), isoprene rubber (IR), and acrylonitrile butadiene rubber (NBR); and polysaccharides such as carboxymethyl cellulose (CMC), xanthan gum, guar gum, and pectin. As the binder used for the negative electrode active material layer, it is particularly preferable to use styrene butadiene rubber (SBR). The binder is preferably contained in the negative electrode active material layer by 0.3 to 3% in the total weight of the negative electrode active material layer. In addition, the negative electrode active material layer may contain an additive generally used for forming the electrode, such as thickener, dispersant, and stabilizer.

In the formation of the negative electrode active material layer, the negative electrode active material, the binder, the conductive agent, and an additive that is necessary are mixed to form a mixture, and a negative electrode active material mixture slurry including this mixture and a solvent is formed. This slurry is applied or rolled on the negative electrode current collector foil, and is dried in an atmosphere of 130 to 150°C. Next, this slurry is dried in an atmosphere of 80 to 150°C. Thus, the negative electrode active material layer can be formed. In the manufacture of the negative electrode, drying the slurry in two stages as described above makes it possible to completely remove the solvent from the slurry and the moisture from the negative electrode. In this manner, by keeping the tensile strength in an appropriate range, the negative electrode with high peel strength and higher reliability can be obtained. Note that the drying for forming the negative electrode active material layer can be performed in an atmosphere of inert gas such as nitrogen and rare gas.

As described above, the negative electrode current collector foil used in the embodiment is the copper foil. The negative electrode has a tensile strength of 17.6 N/mm² or more and 20.0 N/mm² or less, preferably 18.8 N/mm² or more and 19.6 N/mm² or less. The tensile strength of the negative electrode can be changed as appropriate in accordance with the negative electrode active material and the kind and quantity of the binder to be used. In the case of using the copper foil with a thickness of approximately 4 to 20 µm, preferably 4 to 10 µm, as the negative electrode current collector foil and using graphite as the negative electrode active material, the tensile strength of the negative electrode can be adjusted by using the copper foil with an appropriate tensile strength and the binder in an appropriate quantity. The tensile strength of the copper foil to be used as the negative electrode current collector foil is preferably 200 N/mm² or more and 500 N/mm² or less. As described above, the binder is contained by preferably 0.3 to 3% in the total weight of the negative electrode active material layer. Thus, the tensile strength of the negative electrode can be set in a proper range by using the appropriate negative electrode current collector foil and binder.

The separator that can be used in every embodiment includes an olefin resin layer. The olefin resin layer is a layer formed of polyolefin obtained by polymerizing or co-polymerizing α-olefin such as ethylene, propylene, butene, pentene, or hexene. In the embodiment, the olefin resin layer is preferably a layer with a structure having pores closed when the battery temperature has increased, that is, a layer containing porous or microporous polyolefin. When the olefin resin layer has such a structure, even if the battery temperature should increase, the separator is closed (shutdown) to block the ion flow. To achieve the shutdown effect, it is particularly preferable to use the porous polyethylene film. The separator may have a heat-resistant microparticle layer. In this case, the heat-resistant microparticle layer provided to prevent the overheat of the battery can resist the heat of 150°C or more, and includes inorganic microparticles that are stable in an electrochemical reaction. Examples of such inorganic microparticles include inorganic oxide such as silica, alumina (a-alumina, β-alumina, and θ-alumina), iron oxide, titanium oxide, barium titanate, and zirconium oxide, and minerals such as boehmite, zeolite, apatite, kaolin, spinel, mica, and mullite. The separator (ceramic separator) including the heat-resistant layer can also be used.

The electrolyte solution that can be used in every embodiment of the present specification is preferably a nonaqueous electrolyte solution. This electrolyte solution is preferably a mixture containing: a linear carbonate such as dimethyl carbonate (DMC), diethyl carbonate (DEC), ethylmethyl carbonate (EMC), di-n-propyl carbonate, di-t-propyl carbonate, di-n-butyl carbonate, di-isobutyl carbonate, or di-t-butyl carbonate; and a cyclic carbonate such as propylene carbonate (PC) or ethylene carbonate (EC). The electrolyte solution is obtained by dissolving a lithium salt such as lithium hexafluorophosphate (LiPF₆), lithium tetrafluoroborate (LiBF₄), or lithium perchlorate (LiClO₄) in such a carbonate mixture.

The electrolyte solution may contain another cyclic carbonate compound different from the aforementioned cyclic carbonate as the additive. Examples of the cyclic carbonate used as the additive include vinylene carbonate (VC). A cyclic carbonate compound with a halogen may be used as the additive. These cyclic carbonates are the compounds that form a protective film for the positive electrode and the negative electrode in the process of charging and discharging the battery. The additive is particularly preferably the compound that can prevent the sulfur-containing compound such as the disulfonic acid compound or the disulfonic acid ester compound from attacking the positive electrode active material containing the lithium nickel composite oxide. Examples of the cyclic carbonate compound with a halogen include fluoroethylene carbonate (FEC), difluoroethylene carbonate, trifluoroethylene carbonate, chloroethylene carbonate, dichloroethylene carbonate, and trichloroethylene carbonate. Fluoroethylene carbonate corresponding to one example of the cyclic carbonate compound with a halogen is particularly preferably used.

The electrolyte solution may further include a disulfonic acid compound as the additive. The disulfonic acid compound is a compound having two sulfo groups in one molecule. The disulfonic acid compound incorporates a disulfonate compound corresponding to the salt formed by the sulfo group and the metal ion, and a disulfonic acid ester compound corresponding to the ester formed by the sulfo group. One or two of the sulfo groups of the disulfonic acid compound may form the salt with the metal ion or may be in the anion state. Examples of the disulfonic acid compound include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, salts thereof (such as lithium methanedisulfonate and lithium 1,3-ethanedisulfonate), and anions thereof (such as methanedisulfonic acid anion and 1,3-ethanedisulfonic acid anion). Other examples of the disulfonic acid compound include a disulfonic acid ester compound. As the disulfonic acid compound, linear disulfonic acid ester of alkyl diester and aryl diester, such as methanedisulfonic acid, 1,2-ethanedisulfonic acid, 1,3-propanedisulfonic acid, 1,4-butanedisulfonic acid, benzenedisulfonic acid, naphthalenedisulfonic acid, and biphenyldisulfonic acid, and cyclic disulfonic acid ester such as methylene methanedisulfonate ester, ethylene methanedisulfonate ester, and propylene methanedisulfonate ester are preferably used. Methylene methanedisulfonate (MMDS) is particularly preferable.

The positive electrode and the negative electrode described above are stacked with the separator interposed therebetween to form the electrode stack, and this electrode stack is sealed in the package together with the electrolyte solution described above. Thus, the laminate type lithium ion secondary battery can be formed. The package may be formed of any material that does not exude the electrolyte solution to the outside easily. The package may be formed of a laminate film including a heat-resistant protective layer such as polyester, polyamide, or liquid crystal polymer as an outermost layer and including a sealant layer formed of thermoplastic resin as an innermost layer. Examples of the thermoplastic resin of the sealant layer as the innermost layer include polyethylene, polypropylene, ionomer, acid modified polyethylene such as maleic acid modified polyethylene, acid modified polypropylene such as maleic acid modified polypropylene, polyethylene terephthalate (PET), polyethylene naphthalate (PEN), polyethylene isophthalate (PEI), a blend of PET and PEN, a blend of PET and PEI, polyamide resin, a blend of polyamide resin and PET, and a blend of polyamide containing a xylene group and PET. The package may be formed by one laminate film or multiple laminate films that are combined and bonded or welded. The metal layer with a gas barrier property may be formed of aluminum, tin, copper, nickel, or stainless steel. The thickness of the metal layer is preferably in the range of 30 to 50 µm. It is particularly preferable that an aluminum laminate corresponding to a stack of an aluminum foil and a polymer such as polyethylene or polypropylene is used as the material of the package.

As a manufacturing method for the lithium ion secondary battery according to the embodiment, a conventional method can be employed without a particular limitation. The lithium ion secondary battery according to the embodiment may be manufactured as will be described below, for example. That is to say, positive electrode and negative electrode tab leads are connected to the stack of the positive electrode, the separator, and the negative electrode by a method of ultrasonic welding or the like. These positive electrode and negative electrode tab leads are disposed at a predetermined position on the package material that is cut out into a rectangle. Then, a part (flange part) of the package material that overlaps with the positive electrode and negative electrode tabs is heat-sealed. After that, one side of the package material among the sides that do not correspond to the tab extraction portion is heat-sealed to form a bag-shaped package. Next, the electrolyte solution is poured into the bag. Finally, the last one side is heat-sealed under reduced pressure. Note that the tab lead of each electrode to be used here is a terminal used to input and output electricity between the positive electrode or the negative electrode in the battery and the outside. As the negative electrode tab lead of the lithium ion secondary battery, nickel or a copper conductor plated with nickel can be used. As the positive electrode tab lead, an aluminum conductor can be used.

Another embodiment of the present disclosure is an inspection method for the negative electrode for the lithium ion secondary battery. In this inspection method, the tensile strength of the negative electrode for the lithium ion secondary battery including the negative electrode active material layer including the carbon material and the negative electrode current collector foil as the copper foil is measured. If the measured tensile strength is within the predetermined range, the negative electrode is determined to be an acceptable product. If the measured tensile strength is not within the predetermined range, the negative electrode is determined to be an unacceptable product.

In the embodiment, the tensile strength of the negative electrode for the lithium ion secondary battery including the negative electrode active material layer including the carbon material and the negative electrode current collector foil as the copper foil is correlated with the peel strength between the negative electrode active material layer and the negative electrode current collector foil. There is an optimal range in the tensile strength of the negative electrode for the lithium ion secondary battery and the peel strength between the negative electrode active material layer and the negative electrode current collector foil from the viewpoint of improving the cycle characteristic of the lithium ion secondary battery, and this can be considered as below. That is to say, when the tensile strength of the negative electrode for the lithium ion secondary battery is low, the displacement of the negative electrode due to stretch is large. That is to say, the displacement by the tensile history directly results in the distortion between the negative electrode active material layer and the negative electrode current collector foil. It is considered that this distortion causes a damage in binding between the negative electrode active material layer and the negative electrode current collector foil, and in the end, causes the peeling.

On the contrary, when the tensile strength of the negative electrode for the lithium ion secondary battery is high, the displacement of the negative electrode due to stretch is small. That is to say, the displacement of the tensile history does not easily lead to the distortion between the negative electrode active material layer and the negative electrode current collector foil. However, when the tensile strength is high, it means the negative electrode is hard and fragile. Therefore, in the negative electrode with the high tensile strength, even if the distortion is small, a damage may be caused in binding between the negative electrode active material layer and the negative electrode current collector foil. In this manner, it is considered that the higher tensile strength of the negative electrode for the lithium ion secondary battery is not necessarily better, and keeping the tensile strength in the proper range is important.

On the other hand, it has been known that the peel strength between the negative electrode active material layer and the negative electrode current collector foil is related with the cycle characteristic of the negative electrode. In addition, it has also been known that the cycle characteristic of the negative electrode has a large influence on the lifetime and the cycle characteristic of the lithium ion secondary battery itself. For example, in the case of the negative electrode including the carbon material as the negative electrode active material and including the copper foil as the negative electrode current collector foil, if the peel strength between the negative electrode active material layer and the negative electrode current collector foil is about 40 mN/mm or more, the lithium ion secondary battery can have the sufficient cycle characteristic. In view of this, in order to simply estimate the cycle characteristic of the lithium ion secondary battery, the peel strength of the negative electrode can be measured. However, by the tensile test that can perform the measurement with an easier and simpler process than the measurement of the peel strength, the peel strength of the negative electrode and the cycle characteristic of the lithium ion secondary battery can be roughly estimated.

The tensile strength of the negative electrode for the lithium ion secondary battery including the negative electrode active material layer including the carbon material and the negative electrode current collector foil as the copper foil is measured. If the measured tensile strength is within the predetermined range, it is predicted that the peel strength of the negative electrode is also high sufficiently. Therefore, it is determined that this negative electrode is an acceptable product. On the contrary, if the measured tensile strength is not within the predetermined range, it is predicted that the peel strength of the negative electrode is not high sufficiently. Therefore, it is determined that this negative electrode is an unacceptable product.

By performing the tensile test for the manufactured negative electrode for the lithium ion secondary battery, it is possible to distinguish the acceptable product and the unacceptable product immediately. Therefore, the cycle test after the lithium ion secondary battery is assembled using the negative electrode is unnecessary in predicting the cycle characteristic of the lithium ion secondary battery. Note that the predetermined range in the tensile strength for distinguishing the negative electrode as the acceptable product by the tensile test is different depending on the negative electrode active material, the negative electrode current collector foil, and the like to be used. For example, in the negative electrode for the lithium ion secondary battery including the negative electrode active material layer including graphite and the negative electrode current collector foil as the copper foil, the predetermined range in the tensile strength for distinguishing the acceptable product by the tensile test is 17.6 N/mm² or more and 20.0 N/mm² or less, preferably 18.8 N/mm² or more and 19.6 N/mm² or less.

Here, a structure example of the lithium ion secondary battery according to the embodiment is described with reference to the drawing. FIGURE illustrates one example of a cross-sectional view of the lithium ion secondary battery. The lithium ion secondary battery 10 includes as main components, a negative electrode current collector foil 11, a negative electrode active material layer 13, a separator 17, a positive electrode current collector foil 12, and a positive electrode active material layer 15. In the drawing, the negative electrode active material layer 13 is provided to each surface of the negative electrode current collector foil 11, and the positive electrode active material layer 15 is provided to each surface of the positive electrode active current collector foil 12. Alternatively, the active material layer may be formed only on one surface of each current collector foil. The negative electrode current collector foil 11, the positive electrode current collector foil 12, the negative electrode active material layer 13, the positive electrode active material layer 15, and the separator 17 constitute one unit cell (in the drawing, unit cell 19).

A plurality of such unit cells 19 is stacked with the separator 17 interposed therebetween, so that the electrode stack is formed. Extension parts extended from the negative electrode current collector foils 11 are bonded together collectively on a negative electrode tab lead 25. Extension parts extended from the positive electrode current collector foils 12 are bonded together collectively on a positive electrode tab lead 27.

Note that an aluminum plate is preferably used as the positive electrode tab lead, and a copper plate is preferably used as the negative electrode tab lead. The positive electrode tab lead and the negative electrode tab lead may include a partial coating of a polymer material or other metal (such as nickel, tin, or solder) in some cases. The positive electrode tab lead and the negative electrode tab lead are welded to the positive electrode and the negative electrode, respectively. The battery formed by stacking the unit cells in this manner is covered with the package 29 so that the negative electrode tab lead 25 and the positive electrode tab lead 27 that are welded are extracted to the outside. In the package 29, an electrolyte solution 31 is poured. The package 29 has a shape with its periphery heat-sealed.

### Examples

### <Preparation of negative electrode, Examples>

Graphite powder was used as the negative electrode active material. Graphite powder, carbon black powder (CB) as the conductive agent, styrene butadiene rubber (SBR) as the binder resin, and carboxymethyl cellulose (CMC) were mixed uniformly so that graphite powder:CB:SBR:CMC = 95:2:2:1. This mixture was added to ion exchange water as the solvent; thus, a negative electrode active material layer slurry was preparation. The obtained negative electrode active material layer slurry was applied on each surface of an 8-µm-thick copper foil (two kinds, copper foil A and copper foil B) serving as the negative electrode current collector foil by a doctor's blade method. Next, the negative electrode current collector foil with the negative electrode active material layer slurry applied thereon was heated at 140°C for 10 minutes, so that the negative electrode active material layer slurry was dried. Subsequently, the negative electrode current collector foil with the negative electrode active material layer slurry applied thereon was heated at 140°C in a nitrogen atmosphere, so that the negative electrode active material layer slurry was dried further. After that, the negative electrode active material layer slurry on the negative electrode current collector foil was pressed; thus, the negative electrode having the negative electrode active material layer formed on each surface of the negative electrode current collector foil was obtained (Example 1 and Example 2).

### <Preparation of negative electrode, Comparative examples>

Graphite powder was used as the negative electrode active material. Graphite powder, carbon black powder (CB) as the conductive agent, styrene butadiene rubber (SBR) as the binder resin, and carboxymethyl cellulose (CMC) were mixed uniformly so that graphite powder:CB:SBR:CMC = 95:2:2:1. This mixture was added to ion exchange water as the solvent; thus, a negative electrode active material layer slurry was prepared. The obtained negative electrode active material layer slurry was applied on each surface of an 8-µm-thick copper foil (two kinds, copper foil C and copper foil A) serving as the negative electrode current collector foil by a doctor's blade method. Next, the negative electrode current collector foil with the negative electrode active material layer slurry applied thereon was heated at 160°C for 10 minutes, so that the negative electrode active material layer slurry was dried. Subsequently, the negative electrode current collector foil with the negative electrode active material layer slurry applied thereon was heated at 160°C in a nitrogen atmosphere, so that the negative electrode active material layer slurry was dried further. After that, the negative electrode active material layer slurry on the negative electrode current collector foil was pressed; thus, the negative electrode having the negative electrode active material layer on each surface of the negative electrode current collector foil was obtained (Comparative example 1 and Comparative example 2).

### <Measurement of tensile strength>

The tensile strength of the negative electrode was measured basically in accordance with JIS C6515. Each of the negative electrodes according to Examples and Comparative examples was cut into 10 mm × 100 mm, so that a test piece for the tensile test was formed. The test piece was attached to a tensile test machine (ZP-200N, IMADA CO., LTD.) and the test piece was pulled at a tensile speed of 50 mm/min. From the stress applied when the test piece was broken, the tensile strength of the negative electrode (unit: N/mm²) was calculated. The calculation results are shown in Table 1.

Note that the similar tensile test was also performed on each copper foil (with a thickness of 8 µm) used as the negative electrode current collector foil. The results show that the copper foil A had a tensile strength of 333 N/mm², the copper foil B had a tensile strength of 332 N/mm², and the copper foil C had a tensile strength of 352 N/mm².

### <Measurement of peel strength>

The 90°-peeling test of the negative electrode was performed basically in accordance with JIS K6854-1 (determination of peel strength of bonded assemblies). Each of the negative electrodes according to Examples and Comparative examples was cut into 10 mm × 100 mm, so that a test piece for the peeling test was formed. The test piece was attached once to the tensile test machine (ZP-200N, IMADA CO., LTD.) that was used in the above tensile test. The test piece was pulled until the tensile strength per unit cross-sectional area of the electrode became approximately 15 N/mm², and then the test piece was detached from the tensile test machine. The test piece detached from the tensile test machine was attached to the peeling test machine (ZP-5N, IMADA CO., LTD.). While the negative electrode active material layer was peeled in the 90°-direction at a pulling speed of 50 mm/min, the peel strength (unit is mN/mm) was measured. The measurement results are shown in Table 1.

**Table 1: Evaluation of negative electrode**

| | Kind of copper foil | Total thickness of negative electrode (µm) | Tensile strength of negative electrode (N/mm²) | Peel strength (mN/mm) |
|---|---|---|---|---|
| Example 1 | Copper foil A | 150 | 19.60 | 40.40 |
| Example 2 | Copper foil B | 153 | 18.82 | 43.95 |
| Comparative example 1 | Copper foil C | 149 | 20.12 | 29.31 |
| Comparative example 2 | Copper foil A | 155 | 17.55 | 30.12 |

The tensile strength and the peel strength of the negative electrodes according to Examples and Comparative examples shown in Table 1 indicate that there is no correlation between the high tensile strength and the high peel strength. In order for the negative electrode to have the appropriate peel strength, the negative electrode preferably has the tensile strength in the predetermined appropriate range.

The negative electrodes according to Example 1 and Example 2, which have the tensile strength in the range determined in the present embodiment, have the peel strength in the appropriate range. Therefore, it can be estimated that the lithium ion secondary battery formed using these has the high cycle characteristic. On the other hand, the negative electrodes according to Comparative example 1 and Comparative example 2, which do not have the tensile strength in the range determined in the present embodiment, do not have the peel strength in the appropriate range. Therefore, it can be estimated that the lithium ion secondary battery formed using these has the relatively low cycle characteristic.

Examples of the present disclosure have been described so far. However, Examples of the present disclosure merely show some examples of the embodiment of the present disclosure. These Examples do not limit the technical range of the present disclosure to the particular embodiment or the specific structure.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A lithium ion secondary battery (10) comprising:
a power generating element including an electrolyte solution (31), and an electrode stack including a positive electrode including a positive electrode active material layer (15) and a positive electrode current collector foil (12) and a negative electrode including a negative electrode active material layer (13) and a negative electrode current collector foil (11), the positive electrode and the negative electrode being stacked with a separator (17) interposed therebetween; and
a package (29) that internally seals this power generating element, wherein:
the negative electrode current collector foil is a copper foil; and
the negative electrode has a tensile strength of 17.6 N/mm² or more and 20.0 N/mm² or less.

2. The lithium ion secondary battery according to claim 1, wherein the negative electrode has a tensile strength of 18.8 N/mm² or more and 19.6 N/mm² or less.

3. The lithium ion secondary battery according to claim 1 or 2, wherein:
the negative electrode active material layer contains a binder; and
the binder is contained by 0.3 to 3% of a weight of the negative electrode active material layer.

4. The lithium ion secondary battery according to any one of claims 1 to 3, wherein the negative electrode current collector foil has a tensile strength of 200 N/mm² or more and 500 N/mm² or less.

5. A manufacturing method for a negative electrode for a lithium ion secondary battery, comprising forming a negative electrode active material layer (13),
forming the negative electrode active material layer comprising:
applying a negative electrode active material mixture slurry on a negative electrode current collector foil (11);
drying the negative electrode active material mixture slurry in an atmosphere of 130 to 150°C; and
drying the negative electrode active material mixture slurry in an atmosphere of 80 to 150°C.

6. An inspection method for a negative electrode for a lithium ion secondary battery, comprising:
measuring a tensile strength of a negative electrode for a lithium ion secondary battery including a negative electrode active material layer (13) including a carbon material, and a negative electrode current collector foil (11) as a copper foil;
determining that the negative electrode for the lithium ion secondary battery is an acceptable product if the tensile strength is within a predetermined range; and
determining that the negative electrode for the lithium ion secondary battery is an unacceptable product if the tensile strength is not within the predetermined range.
